## Europäisches Patentamt

## European Patent Office

## Office européen des brevets

(11) Veröffentlichungsnummer : **0 023 744**
**B1**

---

(12) **EUROPÄISCHE PATENTSCHRIFT**

(45) Veröffentlichungstag der Patentschrift :
**26.01.83**

(21) Anmeldenummer : **80200710.4**

(22) Anmeldetag : **21.07.80**

(51) Int. Cl.³ : **G 11 B 15/66**

---

(54) **Bandaufzeichnungs- oder Wiedergabegerät mit einer in eine Kassettenaufnahme eingeführten Kassette.**

---

(30) Priorität : **07.08.79 AT 5399/79**

(43) Veröffentlichungstag der Anmeldung :
**11.02.81 Patentblatt 81/06**

(45) Bekanntmachung des Hinweises auf die Patenterteilung : **26.01.83 Patentblatt 83/04**

(84) Benannte Vertragsstaaten :
**BE CH DE FR GB IT LI NL SE**

(56) Entgegenhaltungen :
**DE A 1 966 088**
**DE A 2 705 906**
**DE A 2 911 568**
**FR A 2 020 175**
**FR A 2 425 123**
**GB A 1 162 682**
**US A 3 675 876**
**US A 3 902 681**

(73) Patentinhaber : **N.V. Philips' Gloeilampenfabrieken**
**Groenewoudseweg 1**
**NL-5621 BA Eindhoven (NL)**

(72) Erfinder : **Maryschka, Gerhard**
**p/a INT. OCTROOIBUREAU B.V. Prof. Holstlaan 6**
**NL-5656 AA Eindhoven (NL)**

(74) Vertreter : **Van Weele, Paul Johannes Frits et al**
**INTERNATIONAAL OCTROOIBUREAU B.V. Prof. Holst-**
**laan 6**
**NL-5656 AA Eindhoven (NL)**

---

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

Bandaufzeichnungs- oder Wiedergabegerät mit einer in eine Kassettenaufnahme eingeführten Kassette

Die Erfindung betrifft ein Aufzeichnungs- und/oder Wiedergabegerät für einen bandförmigen Aufzeichnungsträger, der in einer Kassette untergebracht ist, die in eine am Gerät zwischen einer Ladeposition und einer Arbeitsposition verstellbare schachtförmige Kassettenaufnahme einführbar ist, die eine mit mindestens einer Öffnung zum Hindurchtreten von am Gerät vorgesehenen Positionierteilen für eine eingeführte Kassette versehene Bodenwand, eine Festhalteeinrichtung für die in der Ladeposition der Kassettenaufnahme entgegen der Kraft mindestens einer Feder in die Kassettenaufnahme eingeführte Kassette und mindestens eine in der Ladeposition der Kassettenaufnahme die Kassette gegen die Bodenwand drückende weitere Feder aufweist, entgegen deren Kraft in der Arbeitsposition der Kassettenaufnahme die eingeführte Kassette von den Positionierteilen in einer von der Bodenwand der Kassettenaufnahme abgehobenen und von der Festhalteeinrichtung freigegebenen Betriebslage gehalten ist.

Bei einem aus der DE-AS 19 66 088 bekannten derartigen Gerät besteht die Festhalteeinrichtung aus Sperrhaken, die im Bereich einer Einführöffnung der Kassettenaufnahme an derselben feststehend angeordnet sind. In der Ladeposition der Kassettenaufnahme halten diese Sperrhaken eine entgegen der Kraft einer Auswerffeder in die Kassettenaufnahme eingeführte Kassette fest, wobei eine weitere Feder die eingeführte Kassette gegen die Bodenwand der Kassettenaufnahme drückt. Beim Verstellen der Kassettenaufnahme in ihre Arbeitsposition wird die eingeführte Kassette von der Bodenwand abgehoben, wobei sie sich von den Sperrhaken löst und von geräteseitigen Positionierteilen in ihrer Betriebslage gehalten wird. Kehrt die Kassettenaufnahme wieder in ihre Ladeposition zurück, so kann nunmehr die Auswerffeder die Kassette aus der Kassettenaufnahme herausschieben, da diese nicht mehr von den Sperrhaken festgehalten wird. Es hat sich gezeigt, dass der Benützer eines solchen Gerätes darauf achten muss, dass beim Einführen einer Kassette in die Kassettenaufnahme die Kassette auch tatsächlich sicher hinter den feststehenden Sperrhaken zu liegen kommt, da sie sonst von der Auswerffeder wieder aus der Kassettenaufnahme herausgeschoben wird. Ausserdem können solche feststehende Sperrhaken unter Umständen ein einfaches Einführen einer Kassette in die Kassettenaufnahme behindern.

Die Erfindung hat sich zum Ziel gesetzt, Massnahmen anzugeben, die gewährleisten, dass eine Kassette auf einfache Weise in die Kassettenaufnahme eingeführt und eine eingeführte Kassette auch ohne besonderes Zutun des Benützers des Gerätes absolut sicher in der Kassettenaufnahme festgehalten wird, wobei gleichzeitig auch eine sehr einfache Konstruktion angestrebt wird. Die Erfindung weist hierzu bei einem Gerät der eingangs angeführten Art das Kennzeichen auf, dass die Festhalteeinrichtung durch mindestens einen im Bereich der Bodenwand um eine parallel zu derselben und senkrecht zur Einführrichtung der Kassette in die Kassettenaufnahme verlaufenden Achse schwenkbar gelagerten, mit seinem freien Ende in den Einführweg der Kassette in die Kassettenaufnahme ragenden Klemmhebel gebildet ist, der beim Einführen der Kassette in die Kassettenaufnahme von der Kassette in der Einführrichtung derselben von einer Freigabestellung in eine Klemmstellung verschwenkt wird, in welcher der Klemmhebel mit seinem freien Ende mit der eingeführten Kassette unter der resultierenden Kraft der auf die eingeführte Kassette einwirkenden Federn eine Klemmverbindung bildet, die beim Verstellen der Kassettenaufnahme in ihre Arbeitsposition, in der die eingeführte Kassette von den Positionierteilen in ihrer von der Bodenwand der Kassettenaufnahme abgehobenen Betriebslage gehalten ist, durch Abheben der in ihrer Betriebslage gehaltenen Kassette vom Klemmhebel und Rückkehr desselben in seine Freigabestellung aufhebbar ist, aus welcher der Klemmhebel beim Herausführen der Kassette aus der Kassettenaufnahme von der Kassette entgegen der Einführrichtung derselben verschwenkbar ist.

Auf diese Weise ist eine sichere Festhalteeinrichtung für die Kassette in der Kassettenaufnahme geschaffen, da in der Ladeposition der Kassettenaufnahme die auf die eingeführte Kassette einwirkenden Federn, und zwar einerseits die Federn, welche die Kassette gegen die Bodenwand drücken, und andererseits die Federn, welche die Kassette aus der Kassettenaufnahme herauszuschieben trachten, eine resultierende Kraft ergeben, die bestrebt ist, den Klemmhebel entgegen der Einführrichtung der Kassette in die Kassettenaufnahme zu verstellen, wobei es zu der Klemmverbindung zwischen dem Klemmhebel und der eingeführten Kassette kommt. Nach dem Lösen der Klemmverbindung in der Arbeitsposition der Kassettenaufnahme ist hingegen der Klemmhebel aus seiner Freigabestellung entgegen der Einführrichtung der Kassette in die Kassettenaufnahme frei verschwenkbar, womit die Festhalteeinrichtung absolut sicher ausser Funktion gesetzt und das Herausschieben der Kassette aus der Kassettenaufnahme bei deren Übergang in die Ladeposition daher nicht behindert ist. Wie ersichtlich, ist eine derartige Konstruktion einfach und betriebssicher und erlaubt ein einfaches und unbehindertes Einführen und Entnehmen einer Kassette.

Im Hinblick auf eine sehr einfach Konstruktion hat sich als vorteilhaft erwiesen, wenn bei einer Kassettenaufnahme, die in ihrer Ladeposition eine Neigung gegenüber der Horizontalen von weniger als 45° aufweist, der Klemmhebel pendelförmig ausgebildet und durch die auf ihn wirkende Schwerkraft in seiner Freigabestellung gehalten ist. Es kann aber auch vorteilhafterweise der Klemmhebel durch eine Rückstellfeder in seiner Freigabestellung gehalten sein. Bei einem derartigen Gerät kann die Kassettenaufnahme in ihrer Ladeposition praktisch jede beliebige Neigung gegenüber der Horizontalen besitzen, was einen weiten Spielraum für die Konstruktion gibt.

Das freie Ende des Klemmhebels kann beispielsweise abgerundet ausgebildet sein, um die Klemmverbindung mit der Kassette zu bilden. Hierbei kann die Oberfläche des freien Endes des Klemmhebels auch einen höheren Reibwert aufweisen, beispielsweise durch Aufrauhung oder dadurch, dass das freie Ende aus einem gummiartigen Material besteht. Als besonders vorteilhaft hat sich erwiesen, wenn das freie Ende des Klemmhebels keilförmig ausgebildet ist und bei der Bildung der Klemmverbindung mit der Kassette hinter einen an derselben vorgesehenen Vorsprung einfällt. Auf diese Weise wird ein besonders sicheres Festhalten der Kassette in der Kassettenaufnahme in der Ladeposition derselben erreicht.

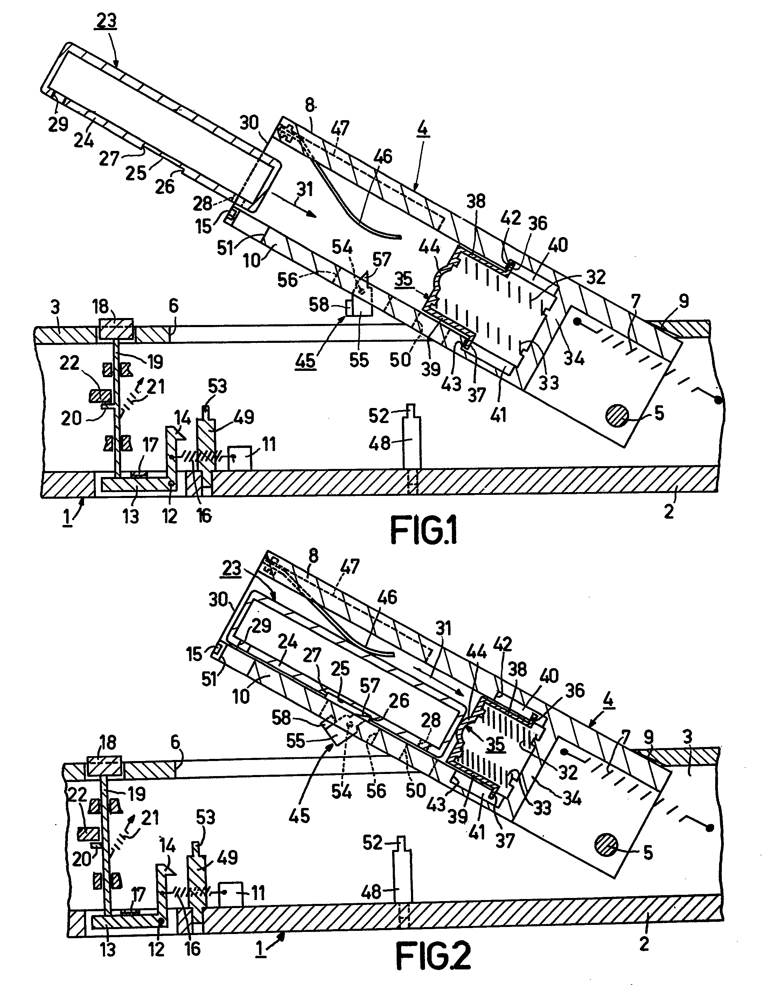

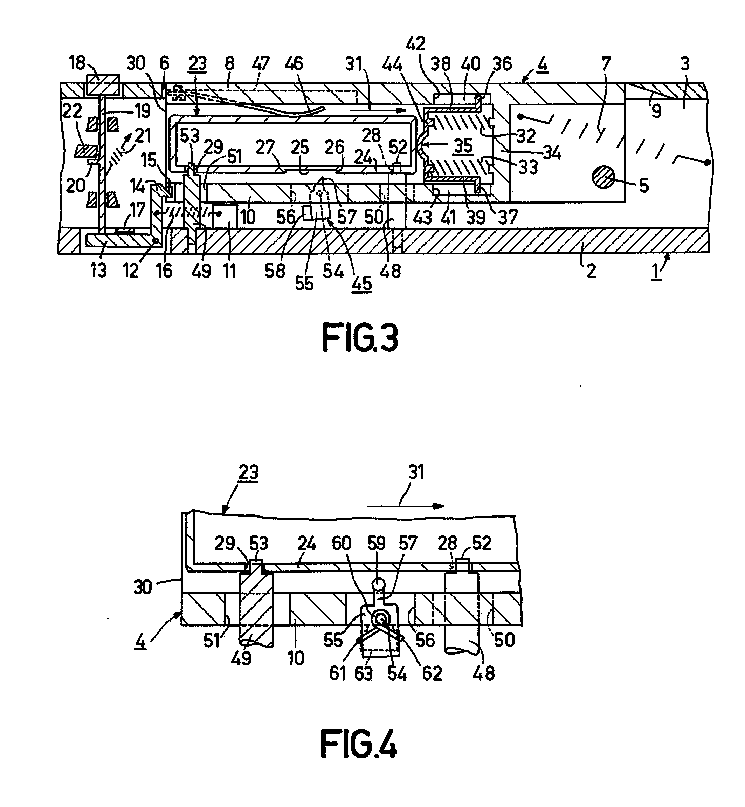

Die Erfindung wird im folgenden an Hand von zwei in den Zeichnungen dargestellten Ausführungsbeispielen, auf welche die Erfindung jedoch nicht beschränkt sein soll, näher beschrieben. Es zeigen die Fig. 1 in einem Schnitt die erfindungswesentlichen Teile eines Aufzeichnungs- und/oder Wiedergabegerätes mit einer in ihrer Ladeposition dargestellten schwenkbaren Kassettenaufnahme, in der sich keine Kassette befindet und die als Festhalteeinrichtung für eine Kassette zwei pendelförmig ausgebildete Klemmhebel aufweist, die in Fig. 1 in ihrer Freigabestellung dargestellt sind, die Fig. 2 das Gerät gemäss Fig. 1 im gleichen Schnitt wie in Fig. 1, wobei sich in der in ihrer Ladeposition dargestellten Kassettenaufnahme eine in dieselbe eingeführte Kassette befindet und die Klemmhebel ihre Klemmstellung einnehmen, die Fig. 3 das Gerät gemäss den Figuren 1 und 2 im gleichen Schnitt wie in diesen beiden Figuren, wobei sich in der in ihrer Arbeitsposition dargestellten Kassettenaufnahme eine von geräteseitigen Positionierteilen in ihrer Betriebslage gehaltene Kassette befindet und die Klemmhebel ihre Freigabestellung einnehmen, und die Fig. 4 im Schnitt ein Detail eines anderen Aufzeichnungs- und/oder Wiedergabegerätes, dessen Festhalteeinrichtung durch einen unter der Wirkung einer Rückstellfeder in seiner Freigabestellung gehaltenen Klemmhebel gebildet ist.

Das in den Figuren 1 bis 3 dargestellte Aufzeichnungs- und/oder Wiedergabegerät 1, das zum Betrieb in horizontaler Gebrauchslage vorgesehen ist, weist eine Basisplatte 2 auf, die auf nicht näher dargestellte Weise mit einem Gehäuse 3 des Gerätes verbunden ist. An dem Gehäuse 3 ist eine schachtförmige Kassettenaufnahme 4 um eine Schwenkachse 5 schwenkbar gelagert. Die Kassettenaufnahme 4 ist hierbei durch eine Öffnung 6 im Gehäuse 3 hindurch zwischen einer in den Figuren 1 und 2 dargestellten Ladeposition und einer in der Fig. 3 dargestellten Arbeitsposition verstellbar, wobei eine einerseits am Gehäuse 2 und andererseits an der Kassettenaufnahme 4 angreifende Zugfeder 7 danach trachtet, die Kassettenaufnahme 4 in ihrer Ladeposition zu halten. Wie aus den Fig. 1 und 2 ersichtlich ist, weist die Kassettenaufnahme in ihrer Ladeposition eine Neigung gegenüber der Horizontalen von etwa 30° auf. Die Ladeposition ist hierbei dadurch festgelegt, dass sich die Kassettenaufnahme 4 unter der Wirkung der Zugfeder 7 mit ihrer Deckwand 8 an einem Anschlag 9 am Gehäuse 3 abstützt. Die Arbeitsposition der Kassettenaufnahme 4 ist dadurch festgelegt, dass sich die Bodenwand 10 der Kassettenaufnahme 4 an einem an der Basisplatte 2 vorgesehenen Anschlag 11 abstützt. Um die Kassettenaufnahme 4 entgegen der Wirkung der Zugfeder 7 in ihrer Arbeitsposition zu halten, ist eine an der Basisplatte 2 um eine Schwenkachse 12 schwenkbar gelagerte winkelhebelförmige Sperrklinke 13 vorgesehen, die mit ihrem hakenförmigen freien Ende 14 zum Eingreifen in eine Ausnehmung 15 in der Bodenwand 10 der Kassettenaufnahme 4 ausgebildet ist. Die Sperrklinke 13 ist hierbei unter der Wirkung einer Feder 16 gegen einen an der Basisplatte 2 vorgesehenen Lappen 17 gehalten, um eine definierte Lage für die Sperrklinke festzulegen. Zum Auslösen der Sperrklinke 13 ist eine im Gehäuse 3 verschiebbar geführte Drucktaste 18 vorgesehen, die mit ihrer Tastenstange 19 an der Sperrklinke 13 angreift. Die Tastenstange 19 weist einen Ansatz 20 auf, der unter der Wirkung einer Feder 21 gegen einen geräteseitigen Anschlag 22 gehalten ist, um eine Ruhelage für die Drucktaste festzulegen.

Das Verstellen der Kassettenaufnahme von ihrer Ladeposition in ihre Arbeitsposition erfolgt im vorliegenden Fall von Hand aus entgegen der Wirkung der Zugfeder 7, indem der Benützer des Gerätes gegen die Deckwand 8 der Kassettenaufnahme drückt. Gegen Ende der Verstellung der Kassettenaufnahme in ihre Arbeitsposition stösst die Bodenwand 10 gegen das hakenförmige Ende 14 der Sperrklinke 13, wodurch diese entgegen der Wirkung der Feder 16 etwas verschwenkt wird. Nach Erreichen der Arbeitsposition der Kassettenaufnahme schwenkt die Sperrklinke 13 unter der Wirkung der Feder 16 in ihre Ausgangslage zurück, wobei das hakenförmige Ende 14 in die Ausnehmung 15 in der Bodenwand 10 der Kassettenaufnahme 4 eingreift. Auf diese Weise ist die Kassettenaufnahme 4 sicher in ihrer Arbeitsposition gehalten, in der sich die Bodenwand 10 an dem Anschlag 11 abstützt. Um die Kassettenaufnahme von ihrer Arbeitsposition in ihre Ladeposition zu bringen, wird die Drucktaste 18 betätigt, wodurch die Sperrklinke 13 verschwenkt wird und dieselbe die Kassettenaufnahme 4 freigibt. Hierauf wird dann die Kassettenaufnahme von der Zugfeder 7 von ihrer Arbeitsposition in ihre Ladeposition verstellt, in der sie von der Zugfeder 7 auch gehalten wird.

Die Kassettenaufnahme 4 dient zur Aufnahme einer Kassette 23, die in den Fig. 1 bis 3 schematisch dargestellt ist und in der ein nicht dargestellter bandförmiger Aufzeichnungsträger untergebracht ist. Der bandförmige Aufzeichnungsträger kann hierbei beispielsweise auf zwei Spulen aufgewickelt sein, wobei die beiden Spulen in einer Ebene nebeneinander oder auch koaxial übereinander angeordnet sein können. Auch kann die Kassette nur eine Spule zur Aufnahme eines bandförmigen Aufzeichnungsträgers aufweisen, was aber im Hinblick auf die vorliegende Erfindung nicht von Bedeutung ist.

Die im wesentlichen quaderförmig ausgebildete Kassette 23 ist an einer Hauptwand 24 mit einer rinnenförmigen Vertiefung 25 versehen, die in den Fig. 1 bis 3 senkrecht zur Zeichenebene verläuft. Auf diese Weise sind zwischen der Vertiefung 25 und den übrigen Teilen der Hauptwand 24 zwei Vorsprünge 26 und 27 gebildet. Ferner weist die Kassette 23 in ihrer Hauptwand 24 zwei in Richtung der rinnenförmigen Vertiefung nebeneinander liegende Positionierbohrungen 28, von denen in den Fig. 1 bis 3 nur eine sichtbar ist, und eine weitere Positionierbohrung 29 auf. Die Positionierbohrungen sind zum Positionieren der Kassette in ihrer Betriebslage vorgesehen, wie dies an Hand der Fig. 3 nachfolgend noch näher beschrieben ist.

Die Kassette 23 ist durch eine an der Vorderseite 30 der Kassettenaufnahme 4 vorgesehene Öffnung hindurch in die in ihrer Ladeposition befindliche Kassettenaufnahme 4 in der durch einen Pfeil 31 angegebenen Einführrichtung einführbar, wie dies in Fig. 1 dargestellt ist. Das Einführen erfolgt gegen Ende des Einführvorganges entgegen der Kraft von zwei Federn 32 und 33, die als Druckfedern ausgebildet sind und die sich einerseits je an einer Rückwand 34 der Kassettenaufnahme und andererseits je an einem in der Einführrichtung 31 der Kassette in der Kassettenaufnahme 4 verschiebbar geführten, im wesentlichen U-förmigen Bügel 35 abstützen. Der U-förmige Bügel 35 weist zwei an ihren freien Enden 36 und 37 abgewinkelte Stege 38 und 39 auf, die mit ihren abgewinkelten Enden 36 und 37 in je eine in der Deckwand 8 bzw. der Bodenwand 10 vorgesehene Ausnehmung 40 bzw. 41 ragen. Wenn keine Kassette in die Kassettenaufnahme eingeführt ist, sind die abgewinkelten Enden 36 und 37 unter Wirkung der Federn 32 und 33 gegen die Enden 42 bzw. 43 der Ausnehmungen 40 und 41 gehalten, wodurch eine Endlage für den Bügel 35 festgelegt ist, wie dies Fig. 1 zeigt. Beim Einführen der Kassette in die Kassettenaufnahme stösst die Kassette gegen den Basisteil 44 des Bügels 35 und verschiebt den Bügel entgegen der Wirkung der Federn 32 und 33 soweit, bis die Kassette zur Gänze in die Kassettenaufnahme eingeführt ist. Sobald dies der Fall ist, wird die Kassette von einer Festhalteeinrichtung 45 in der Kassettenaufnahme festgehalten, deren Aufbau im folgenden noch detailliert beschrieben ist. Die Festhalteeinrichtung verhindert somit, dass die in die in ihrer Ladeposition befindliche Kassettenaufnahme eingeführte Kassette unter der Kraftwirkung der Federn 32 und 33 unerwünschterweise aus der Kassettenaufnahme herausgeschoben wird.

An dieser Stelle sei noch festgehalten, dass die Federn, entgegen deren Wirkung das Einführen der Kassette in die Kassettenaufnahme erfolgt, nicht unbedingt in der Kassettenaufnahme vorgesehen sein müssen. Solche Federn können auch an der Kassette angebracht sein. Beispielsweise kann hierzu eine Kassette mit einer gegenüber der Kassette verschiebbaren Manschette versehen und zwischen der Manschette und der Kassette eine Feder wirksam sein, wobei die Manschette beim Einführen einer solchen Kassette in die Kassettenaufnahme gegenüber der Kassette entgegen der Kraft der zwischen der Manschette und der Kassette wirksamen Feder verschoben wird.

Wie aus den Figuren weiter ersichtlich ist, sind in der Kassettenaufnahme 4 noch zwei weitere Federn 46 vorgesehen, die in Richtung der Schwenkachse 5 der Kassettenaufnahme 4 nebeneinander liegen und von denen in den Figuren 1 bis 3 nur eine Feder sichtbar ist. Die Federn 46 sind als Blattfedern ausgebildet und je in einer Ausnehmung 47 in der Deckwand 8 der Kassettenaufnahme 4 angebracht. Die Federn 46 drücken eine in der Ladeposition der Kassettenaufnahme in dieselbe eingeführte Kassette gegen die Bodenwand 10 der Kassettenaufnahme, wie dies aus Fig. 2 ersichtlich ist.

Wie erwähnt, weist die Kassette 23 Positionierbohrungen 28 und 29 zum Positionieren der in die Kassettenaufnahme eingeführten Kassette in ihrer Betriebslage auf, wenn sich die Kassettenaufnahme in ihrer Arbeitsposition befindet. Zum Positionieren der in die Kassettenaufnahme 4 eingeführten Kassette in ihrer Betriebslage weist das Gerät 1 drei korrespondierend zu den drei Positionierbohrungen 28 und 29 in der Hauptwand 24 der Kassette auf der Basisplatte 2 angeordnete zylinderförmige Positionierstifte 48 und 49 auf. Die drei Positionierstifte treten hierbei, wie aus Fig. 3 ersichtlich ist, bei sich in ihrer Arbeitsposition befindlicher Kassettenaufnahme durch drei in der Bodenwand 10 der Kassettenaufnahme vorgesehene Öffnungen 50 und 51 hindurch, um mit der in die Kassettenaufnahme eingeführten Kassette zusammenzuwirken. Dabei stützt sich die Kassette mit ihrer Hauptwand 24 an den Positionierstiften 28 und 29 ab, wobei an den freien Enden der Positionierstifte vorgesehene, gegenüber den Positionierstiften einen kleineren Durchmesser aufweisende zylindrische Ansätze 52 und 53 in die Positionierbohrungen 28 und 29 der Kassette eindringen. Auf diese Weise ist die Kassette in ihrer Betriebslage festgelegt, in der dieselbe von den Positionierstiften entgegen der Kraftwirkung der Blattfedern 46 von der Bodenwand 10 der Kassettenaufnahme 4 abgehoben gehalten ist.

Zum Festhalten für die in der Ladeposition der Kassettenaufnahme entgegen der Kraft der beiden Druckfedern 32 und 33 in die Kassettenaufnahme eingeführte Kassette ist, wie erwähnt, eine Festhalteeinrichtung 45 vorgesehen. Die Festhalteeinrichtung ist in vorliegendem Fall durch zwei im Bereich der Bodenwand 10 der Kassettenaufnahme um je eine parallel zu derselben und senkrecht zur Einführrichtung 31 der Kassette 23 in die Kassettenaufnahme verlaufende Achse 54 schwenkbar gelagerte Klemmhebel 55 gebildet, die in Richtung der Achse 5 der Kassettenaufnahme 4 nebeneinander liegen und von denen in den Figuren 1 bis 3 nur ein Klemmhebel sichtbar ist. Hierbei weist die Kassettenaufnahme 4 in ihrer Bodenwand 10 zwei nebeneinander liegende Durchbrüche 56 auf, in denen die Klemmhebel 55 aufgenommen sind. Dabei ragen die beiden Klemmhebel 55 mit ihren freien Enden 57, die keilförmig ausgebildet sind, in den Einführweg der Kassette in die Kassettenaufnahme. Auf diese Weise sind die beiden Klemmhebel 55 beim Einführen der Kassette in die Kassettenaufnahme von der Kassette in der Einführrichtung 31 derselben von einer Freigabestellung, wie sie in Fig. 1 gezeigt ist, in eine Klemmstellung verschwenkbar, die in Fig. 2 dargestellt ist. Unter einer Verschwenkung der Klemmhebel 55 in der Einführrichtung 31 der Kassette ist hierbei eine Verstellung der Klemmhebel zu verstehen, wobei die freien Enden 57 der Klemmhebel sich in der Einführrichtung 31 bewegen.

Im vorliegenden Fall sind die beiden Klemmhebel 55 pendelförmig ausgebildet und durch die auf die Klemmhebel wirkende Schwerkraft in ihrer Freigabestellung gehalten. Wie aus den Figuren hierbei ersichtlich ist, sind die Klemmhebel 55 an ihren von den keilförmigen Enden 57 abgewandten Enden mit je einem zur Vorderseite 30 der Kassettenaufnahme weisenden Ansatz 58 versehen. Das Vorsehen dieser Ansätze 58 hat, wie die Figuren 1 und 3 zeigen, zur Folge, dass die Klemmhebel 55 durch die auf dieselben wirkende Schwerkraft in ihrer Freigabestellung in einer gegenüber der Vertikalen entgegen der Einführrichtung 31 der Kassette 23 geneigten, mit ihren freien Enden 57 zur Vorderseite 30 der Kassettenaufnahme weisenden Lage gehalten sind.

Wie erwähnt, werden die Klemmhebel beim Einführen einer Kassette in die in ihrer Ladeposition befindliche Kassettenaufnahme von ihrer Freigabestellung in ihre Klemmstellung verschwenkt. In der Klemmstellung der beiden Klemmhebel 55 bilden dieselben mit ihren freien Enden 57 mit der eingeführten Kassette 23 unter der resultierenden Kraft der auf die eingeführte Kassette einwirkenden Federn, nämlich der über den Bügel 35 auf die Kassette im Sinne eines Herausschiebens derselben aus der Kassettenaufnahme einwirkenden Druckfedern 32 und 33 und der die Kassette gegen die Bodenwand 10 der Kassettenaufnahme haltenden Blattfedern 46, eine Klemmverbindung. Wie aus Fig. 2 ersichtlich ist, fallen hierbei bei der Bildung dieser Klemmverbindung mit der Kassette die keilförmig ausgebildeten freien Enden 57 der Klemmhebel 55 hinter den an der Kassette vorgesehenen Vorsprung 26 ein, wodurch eine besonders sichere Klemmverbindung erzielt wird. Die beim Einführen der Kassette in die in ihrer Ladeposition befindliche Kassettenaufnahme gebildete Klemmverbindung zwischen den Klemmhebeln und der Kassette ist beim Verstellen der Kassettenaufnahme in ihre Arbeitsposition, in der die eingeführte Kassette von den Positionierteilen in ihrer von der Bodenwand der Kassettenaufnahme abgehobenen Betriebslage gehalten ist, durch Abheben der in ihrer Betriebslage gehaltenen Kassette von den Klemmhebeln und Rückkehr derselben in ihre Freigabestellung aufhebbar, wodurch die Kassette von den Klemmhebeln nicht mehr festgehalten wird. Diese Situation ist in Fig. 3 dargestellt. Aus der in Fig. 3 dargestellten Freigabestellung sind die Klemmhebeln 55 beim Herausführen der Kassette aus der Kassettenaufnahme von der Kassette nur entgegen der Einführrichtung 31 der Kassette verstellbar, wie dies im folgenden noch beschrieben ist. Wie aus Fig. 3 ersichtlich ist, stimmt die in Fig. 3 dargestellte Freigabestellung mit der in Fig. 1 dargestellten Freigabestellung, die durch die auf die pendelförmig ausgebildeten Klemmhebel wirkende Schwerkraft bestimmt sind, nicht überein, da die Kassettenaufnahme in den beiden in den Figuren 1 und 3 dargestellte Situationen unterschiedliche Lagen einnimmt. Es handelt sich jedoch in beiden Fällen um eine Freigabestellung der Klemmhebel, da als Freigabestellung der Klemmhebel gegenüber der Kassette alle Lagen der Klemmhebel zu verstehen sind, in denen die Klemmhebel keine Klemmverbindung mit der Kassette bilden.

Wenn die Kassette 23 in die in ihrer Ladeposition befindliche Kassettenaufnahme durch einfaches geradliniges Einschieben in der Einführrichtung 31 eingeführt wird, wie dies in Fig. 1 dargestellt ist, dann stösst die Kassette gegen die in die Kassettenaufnahme ragenden keilförmig ausgebildeten freien Enden 57 der in ihrer Freigabestellung befindlichen Klemmhebel 55 und verschwenkt dieselben in der Einführrichtung 31 der Kassette so weit, dass die freien Enden 57 über die Hauptwand 24 der Kassette gleiten. Danach stösst die Kassette gegen den Bügel 35 und verschiebt denselben entgegen der Kraft der Druckfedern 32 und 33, wobei diese Federn komprimiert werden. Während des Einschiebens treten auch die an der Deckwand 8 der Kassettenaufnahme angebrachten Blattfedern 46 mit der Kassette in Wirkverbindung und drücken die Kassette gegen die Bodenwand 10 der Kassettenaufnahme. Sobald die Kassette vollständig in die Kassettenaufnahme eingeführt ist, fallen die Klemmhebel 55 unter der Wirkung der auf dieselben wirkenden Schwerkraft mit ihren keilförmig ausgebildeten freien Enden 57 hinter den Vorsprung 26 an der Hauptfläche 24 der Kassette ein. Da die eingeführte Kassette unter der resultierenden Kraft der auf dieselbe einwirkenden Federn 32, 33 und 45 bestrebt ist, die Klemmhebel 55 entgegen der Einführrichtung 31 der Kassette 23 in die Kassettenaufnahme zu verstellen, und die Klemmhebel diese Verstellung aber nicht ausführen können, kommt es zur Bildung einer Klemmverbindung zwischen den Klemmhebeln und der Kassette, wodurch die Kassette von den Klemmhebeln sicher in der in ihrer Ladeposition befindlichen Kassettenaufnahme festgehalten wird.

Nun kann die Kassettenaufnahme, wie bereits vorstehend erwähnt, von Hand aus in ihre Arbeitsposition verschwenkt werden, wobei die Kassettenaufnahme durch die Öffnung 6 im Gehäuse 3 hindurch in das Innere des Gerätes verstellt wird. Knapp bevor die Kassettenaufnahme ihre Arbeitsposition erreicht, dringen die Ansätze 52 und 53 der Positionierstifte 48 und 49 in die Positionierbohrungen 28 und 29 der Kassette ein und stützt sich die Kassette mit ihrer Hauptwand 24 an den Positionierstiften unter der Wirkung der Blattfedern 46 ab, wie dies in Fig. 3 dargestellt ist. Beim weiteren Verschwenden der Kassettenaufnahme in ihre Arbeitsposition hebt daher die Bodenwand 10 der Kassettenaufnahme von der Hauptwand 24 der Kassette ab, wobei auch die pendelförmig ausgebildeten Klemmhebel 55 mit ihren freien Enden 57 von der Kassette abheben und unter der Wirkung der Schwerkraft in ihre in Fig. 3 dargestellte Freigabestellung schwenken, in welcher die Klemmhebel gegenüber der Vertikalen entgegen der Einführrichtung 31 der Kassette geneigt sind, wobei die freien Enden 57 der Klemmhebel gegenüber der Vertikalen zur Vorderseite 30 der Kassettenaufnahme weisen. Auf diese Weise wird die beim Einschieben der Kassette in die Kassettenaufnahme gebildete Klemmverbindung beim Verstellen der Kassettenaufnahme in ihre Arbeitsposition selbsttätig gelöst, wobei die Kassette bei in ihrer Arbeitsposition befindlicher Kassettenaufnahme von den geräteseitigen Positionierteilen in einer von der Bodenwand der Kassettenaufnahme abgehobenen und von der durch die Klemmhebel gebildeten Festhalteeinrichtung freigegebenen Betriebslage gehalten ist. In diese Betriebslage können daher auch die über den Bügel 35 auf die Kassette einwirkenden Druckfedern 32 und 33 keine Verstellung der Kassette entgegen der Einführrichtung derselben bewirken, da dies durch die in die Positionierbohrungen eingedrungenen Ansätze 52 und 53 der Positionierstifte 48 und 49 unterbunden ist. Wie erwähnt, ist die Kassettenaufnahme mit Hilfe der Sperrklinke 13 dabei sicher in ihrer Arbeitsposition gehalten.

Wenn die Kassettenaufnahme von ihrer Arbeitsposition in ihrer Ladeposition zurückverstellt werden soll, wird die Drucktaste 18 betätigt. Hierdurch wird die Sperrklinke 13 verschwenkt und die Verriegelung mit der Kassettenaufnahme gelöst, so dass dieselbe unter der Wirkung der Zugfeder 7 in ihre Ladeposition verschwenkt wird. Wenn die Kassettenaufnahme ihre Arbeitsposition verlässt, dann wird zunächst die Bodenwand 10 der Kassettenaufnahme gegen die vorerst noch von den Positionierstiften 48 und 49 gehaltene Kassette angehoben. Dabei stossen die freien Enden 57 der an der Bodenwand befestigten Klemmhebel 55 gegen die Hauptwand 24 der Kassette und werden die Klemmhebel auf Grund der Tatsache, dass dieselben bereits in ihrer zuvor eingenommenen Freigabestellung eine gegenüber der Vertikalen entgegen der Einführrichtung der Kassette geneigte Lage einnehmen, was auf das Vorsehen der Ansätze 58 an den Klemmhebeln 55 zurückzuführen ist, entgegen der Einführrichtung der Kassette weiter verschwenkt. Somit können die Klemmhebel keine Klemmverbindung mehr mit der Kassette bilden, wenn die Kassettenaufnahme aus ihrer Arbeitsposition in ihre Ladeposition verstellt wird. Bei der weiteren Verstellung der Kassettenaufnahme stösst die Bodenwand 10 derselben gegen die Hauptwand 24 der Kassette, wonach die Kassette von den Positionierstiften 48 und 49 abgehoben wird und die Ansätze 52 und 53 aus den Positionierbohrungen 28 und 29 herausgezogen werden. Sobald dies erfolgt ist, wird die von den Positionierstiften und von den Klemmhebeln freigegebene Kassette von dem Bügel 35 unter der Wirkung der Druckfedern 32 und 33 entgegen der Einführrichtung 31 aus der Kassettenaufnahme etwas herausgeschoben, wobei die Klemmhebel entgegen der Einführrichtung der Kassette in die Kassettenaufnahme von der Kassette verschwenkt gehalten sind. Sobald die Kassettenaufnahme ihre Ladeposition einnimmt, ragt daher die von den Druckfedern 32 und 33 verschobene Kassette bereits aus der Kassettenaufnahme zum Teil heraus, wobei der Bügel 35 mit seinen abgewinkelten Stegen 38 und 39 an den Enden 42 bzw. 43 der Ausnehmungen 40 und 41 anliegt. Nun kann die Kassette einfach mit der Hand ergriffen und vollständig aus der Kassettenaufnahme herausgezogen werden kann. Nachdem die Kassette aus der Kassettenaufnahme entnommen ist, kehren die Klemmhebel unter der Wirkung der Schwerkraft in die in Fig. 1 dargestellte Freigabestellung zurück, aus welcher beim nachfolgenden Einführen einer Kassette die Klemmhebel wieder in die in Fig. 2 dargestellte Klemmstellung verschwenkbar sind. Die Klemmhebel sind somit nach dem Entnehmen einer Kassette aus der Kassettenaufnahme sofort wieder zum Festhalten einer nachfolgend in die Kassettenaufnahme eingeführten Kassette betriebsbereit.

Wie aus Vorstehendem ersichtlich ist, wird bei dem Gerät gemäss den Figuren 1 bis 3 eine in einfacher Weise in die in ihrer Ladeposition befindliche Kassettenaufnahme eingeführte Kassette von den Klemmhebeln besonders sicher in derselben festgehalten, wobei das Festhalten durch eine lösbare Klemmverbindung zwischen den Klemmhebeln und der Kassette erfolgt. Das Lösen der Klemmverbindung erfolgt dabei vorteilhafterweise selbsttätig bei der Verstellung der Kassettenaufnahme in ihre Arbeitsposition. Beim Lösen der Klemmverbindung werden dabei die Klemmhebel in eine Freigabestellung verschwenkt, aus der heraus die Klemmhebel beim Herausführen der Kassette aus der Kassettenaufnahme keine Klemmverbindung mit der Kassette mehr bilden können.

Die Fig. 4 zeigt ausschnittsweise ein anderes Aufzeichnungs- und/oder Wiedergabegerät, dessen Kassettenaufnahme 4 in ihrer Arbeitsposition dargestellt ist. Das Gerät weist als Festhalteeinrichtung 45 für eine in die Kassettenaufnahme 4 eingeschobene Kassette 23 nur einen um eine Achse 54 schwenkbaren Klemmhebel 55 auf. Der Klemmhebel 55 trägt an seinem freien Ende 57 einen in Richtung der Achse 54 verlaufenden, zylinderförmigen Klemmblock 59, der aus Gummi besteht, um beim Zusammenwirken mit der Kassette eine grosse Reibwirkung zu gewährleisten. Wie die Fig. 4 zeigt, ist der Klemmhebel 55 durch eine Rückstellfeder 60 in seiner Freigabestellung gehalten. Die Rückstellfeder 60 ist hierbei als eine auf die Achse 54 aufgesetzte Drahtfeder ausgebildet, deren Enden 61 und 62 senkrecht zur Zeichenebene abgewinkelt ausgebildet sind. Zwischen den abgewinkelten Enden 61 und 62 ist der Klemmhebel 55 aufgenommen, wobei sich die abgewinkelten Enden ferner unter Vorspannung an einem von der Bodenwand 10 der Kassettenaufnahme 4 vorspringenden Lappen 63 abstützen. Dieser Lappen 63 ist hierbei so ausgebildet und nimmt gegenüber dem Klemmhebel eine solche Lage ein, dass der Klemmhebel 55 in seiner Freigabestellung, analog wie dies bereits an Hand des Gerätes gemäss den Figuren 1 bis 3 beschrieben wurde, gegenüber der Vertikalen zu der Hauptwand 24 der Kassette 13 eine entgegen der Einführrichtung 31 der Kassette geneigte Lage einnimmt, wodurch wieder sichergestellt ist, dass beim Herausführen der Kassette aus der Kassettenaufnahme, nachdem die Kassettenaufnahme von ihrer Arbeitsposition in ihre Ladeposition verstellt wurde, der Klemmhebel mit der Kassette unter der resultierenden Kraft der auf die Kassette einwirkenden Federn keine Klemmverbindung bilden kann. Die Funktionsweise der Festhalteeinrichtung 45 des Gerätes gemäss Fig. 4 ist analog zu jener des Gerätes gemäss den Figuren 1 bis 3. Auch bei dem Gerät gemäss Fig. 4 wird eine Kassette von dem Klemmhebel sicher in der Kassettenaufnahme gehalten. Durch das Rückstellen des Klemmhebels in seine Freigabestellung mit Hilfe einer Rückstellfeder ist hierbei erreicht, dass der Klemmhebel in jeder räumlichen Lage der Kassettenaufnahme zur Bildung einer Klemmverbindung mit einer eingeführten Kassette funktionsfähig ist.

**Ansprüche**

1. Aufzeichnungs- und/oder Wiedergabegerät für einen bandförmigen Aufzeichnungsträger, der in einer Kassette (23) untergebracht ist, die in eine am Gerät zwischen einer Ladeposition (Fig. 1) und einer Arbeitsposition (Fig. 3) verstellbare schachtförmige Kassettenaufnahme (4) einführbar ist, die eine mit mindestens einer Öffnung (28, 29) zum Hindurchtreten von am Gerät vorgesehenen Positionierteilen (52, 53) für eine eingeführte Kassette versehene Bodenwand (10), eine Festhalteeinrichtung (45) für die in der Ladeposition der Kassettenaufnahme entgegen der Kraft mindestens einer Feder (32, 33) in die Kassettenaufnahme eingeführte Kassette und mindestens eine in der Ladeposition der Kassettenaufnahme die Kassette gegen die Bodenwand (10) drückende weitere Feder (46) aufweist, entgegen deren Kraft in der Arbeitsposition der Kassettenaufnahme die eingeführte Kassette von den Positionierteilen (52, 53) in einer von der Bodenwand der Kassettenaufnahme abgehobenen und von der Festhalteeinrichtung freigegebenen Betriebslage gehalten ist (Fig. 3), dadurch gekennzeichnet, dass die Festhalteeinrichtung durch mindestens einen im Bereich der Bodenwand um eine parallel zu derselben und senkrecht zur Einführrichtung der Kassette in die Kassettenaufnahme verlaufende Achse (54) schwenkbar gelagerten, mit seinem freien Ende in den Einführweg der Kassette in die Kassettenaufnahme ragenden Klemmhebel (55) gebildet ist, der beim Einführen der Kassette in die Kassettenaufnahme von der Kassette in der Einführrichtung derselben von einer Freigabestellung in eine Klemmstellung (Fig. 2) verschwenkt wird, in welcher der Klemmhebel mit seinem freien Ende (57) mit der eingeführten Kassette unter der resultierenden Kraft der auf die eingeführte Kassette einwirkenden Federn (32, 33, 46) eine Klemmverbindung bildet, die beim Verstellen der Kassettenaufnahme in ihre Arbeitsposition (Fig. 3), in der die eingeführte Kassette von den Positionierteilen (52, 53) in ihrer von der Bodenwand (10) der Kassettenaufnahme abgehobenen Betriebslage gehalten ist, durch Abheben der in ihrer Betriebslage gehaltenen Kassette vom Klemmhebel und Rückkehr desselben in seine Freigabestellung aufhebbar ist, aus welcher der Klemmhebel beim Herausführen der Kassette aus der Kassettenaufnahme von der Kassette entgegen der Einführrichtung derselben verschwenkbar ist.

2. Gerät nach Anspruch 1, dadurch gekennzeichnet, dass bei einer Kassettenaufnahme, die in ihrer Ladeposition eine Neigung gegenüber der Horizontalen von weniger als 45° aufweist (Fig. 1), der Klemmhebel pendelförmig ausgebildet und durch die auf ihn wirkende Schwerkraft in seiner Freigabestellung gehalten ist.

3. Gerät nach Anspruch 1, dadurch gekennzeichnet, dass der Klemmhebel durch eine Rückstellfeder in seiner Freigabestellung gehalten ist. (Fig. 4).

4. Gerät nach einem der vorhergehenden Ansprüche, dadurch gekennzeichnet, dass das freie Ende des Klemmhebels keilförmig ausgebildet ist und bei der Bildung der Klemmverbindung mit der Kassette hinter einen an derselben vorgesehenen Vorsprung einfällt. (Fig. 2).

**Claims**

1. A recording and/or reproducing apparatus for use with a record carrier in the form of a tape which is accommodated in a cassette (23), which cassette is adapted to be inserted into a channel-shaped cassette holder (4) on the apparatus, which holder is movable between a loading position (Fig. 1) and an operating position (Fig. 3) and comprises a bottom wall (10) formed with at least one opening (28, 29) for the passage of members (52, 53) provided for locating an inserted cassette, which members are arranged on the apparatus, a latching device (45) for the cassette, which cassette is inserted into the cassette holder in the loading position of said holder against the force of at least one spring (32, 33) and at least one further spring (46) which urges the cassette against the bottom wall in the loading position of the cassette holder, the inserted cassette being held in an operating position (Fig. 3) in which it is lifted off the bottom wall of the cassette holder by the locating members (52, 53) and into which it is released by the latching device against the force of said further spring in the operating position of the cassette holder, characterized in that the latching device comprises at least one clamping lever (55) which is pivotally mounted at the location of the bottom wall so as to be pivotable about an axis (54) which extends parallel to said wall and at right angles to the direction of insertion of the cassette into the cassette holder, which lever has a free end which projects into the path of insertion of the cassette into the cassette holder and during insertion of the cassette into the cassette holder is pivoted by the cassette from a released position to a clamping position (Fig. 2) in which the free end (57) of the clamping lever forms a clamping connection with the inserted cassette under the influence of the resultant force of the springs (32, 33, 46) which act on the inserted cassette, which connection, when the cassette holder is moved to its operationg position (Fig. 3), is released by lifting the cassette, which is held in its operating position, off the clamping lever and returning said lever to its released position, out of which position the clamping lever can be pivoted by the cassette substantially in a direction opposite to the direction of insertion of said cassette when the cassette is removed from the cassette holder.

2. An apparatus as claimed in Claim 1, characterized in that in a cassette holder, which in its loading position has an inclination relative to the horizontal of less than 45° (Fig. 1), the clamping lever is constructed as a pendulum and is held in its released position by the force of gravity to which it is subjected.

3. An apparatus as claimed in Claim 1, characterized in that the clamping lever is held in its released position by a return spring (Fig. 4).

4. An apparatus as claimed in any of the preceding Claims, characterized in that the free end of the clamping lever is wedge-shaped and is engageable with a projection on the cassette to form the clamping connection with said cassette (Fig. 2).

## Revendications

1. Appareil d'enregistrement et/ou de reproduction pour un porteur d'enregistrement en forme de bande, qui est logé dans une cassette (23) pouvant être introduite dans l'appareil dans un porte-cassette (4) en forme d'étui mobile entre une position de chargement (Fig. 1) et une position de travail (Fig. 3), ce porte-cassette présentant une paroi de fond (10) pourvue d'au moins une ouverture (28, 29) pour le passage d'organes de positionnement (52, 53) prévus sur l'appareil et destinés à une cassette introduite, un dispositif de retenue (45) pour la cassette introduite dans la position de chargement du porte-cassette à l'encontre de la sollicitation d'au moins un ressort (32, 33) prévu dans ce porte-cassette et au moins un autre ressort (46) pressant la cassette contre la paroi de fond (10) dans la position de chargement du porte-cassette, la cassette introduite étant, à l'encontre de la sollicitation du ressort et dans la position de travail du porte-cassette, maintenue par les organes positionneurs (52, 53) dans une position de fonctionnement soulevée de la paroi de fond du porte-cassette et libérée du dispositif de retenue (Fig. 3), caractérisé en ce que le dispositif de retenue est formé par au moins un levier de serrage (55) s'étendant par son extrémité libre dans le trajet d'introduction de la cassette et dans le porte-cassette et monté à pivot dans la zone de la paroi de fond autour d'un axe (54) s'étendant parallèlement à cette paroi de fond et perpendiculairement à la direction d'introduction de la cassette dans le porte-cassette, ce levier, lors de l'introduction de la cassette dans le porte-cassette, pivotant à l'intervention de la cassette dans le sens d'introduction de celle-ci à partir d'une position de libération dans une position de serrage (Fig. 2) dans laquelle le levier de serrage forme, par son extrémité libre (57), avec la cassette introduite et sous l'effet de la force résultante des ressorts (32, 33, 46) agissant sur la cassette introduite, une liaison de serrage qui, lors du déplacement du porte-cassette dans sa position de travail (Fig. 3) dans laquelle la cassette introduite est maintenue par les organes de positionnement (52, 53) dans sa position de fonctionnement écartée de la paroi de fond (10) du porte-cassette, peut être supprimée par écartement de la cassette maintenue dans sa position de fonctionnement du levier de serrage et par retour de celui-ci dans sa position de libération à partir de laquelle le levier de serrage, lors de la sortie de la cassette du porte-cassette, peut pivoter à l'intervention de la cassette dans un sens opposé au sens d'introduction de celle-ci.

2. Appareil suivant la revendication 1, caractérisé en ce que, dans le cas d'un porte-cassette qui présente, dans sa position de chargement, une inclinaison par rapport à l'horizontale d'au moins 45° (Fig. 1), le levier de serrage est d'une forme pendulaire et est maintenu dans sa position de libération par gravité.

3. Appareil suivant la revendication 1, caractérisé en ce que le levier de serrage est maintenu dans sa position de libération (Fig. 4) par un ressort de rappel.

4. Appareil suivant l'une quelconque des revendications précédentes, caractérisé en ce que l'extrémité libre du levier de serrage est cunéiforme et, lors de l'établissement de la liaison de serrage avec la cassette, elle s'engage derrière une saillie ou un épaulement prévu sur celle-ci (Fig. 2).

FIG.1

FIG.2

FIG.3

FIG.4